# EUROPÄISCHE PATENTSCHRIFT

(11) **EP 0 534 160 B1**
(45) Veröffentlichungstag und Bekanntmachung des Hinweises auf die Patenterteilung: **21.06.1995**
(21) Anmeldenummer: 92114633.8
(22) Anmeldetag: 27.08.1992
(51) Int. Cl.: B41F 13/10, F16C 13/00

(54) **Rotationsdruckmaschine**
Rotary printing machine
Machine à imprimer rotative

(30) Priorität: 25.09.1991 CH 2842/91; 06.11.1991 CH 3232/91
(43) Veröffentlichungstag der Anmeldung: 31.03.1993
(73) Patentinhaber: Sulzer - Escher Wyss AG, CH-8023 Zürich (CH)
(72) Erfinder: Lehmann, Rolf, CH-8964 Rudolfstetten (CH); Schnyder, Eugen, CH-5622 Waltenschwil (CH)
(74) Vertreter: Hammer, Bruno, Dr.

(56) Entgegenhaltungen:
- DE-A- 3 710 724
- DE-U- 8 808 352
- DE-U- 8 815 224
- GB-A- 2 105 497
- US-A- 4 058 877
- PATENT ABSTRACTS OF JAPAN vol. 10, no. 174 (M-490)(2230) 19 June 1986;& JP-A-61 024813 (MITSUBISHI JUKOGYO KK) 03 February 1986.

## Beschreibung

### Technisches Gebiet

Die Erfindung betrifft eine Rotationsdruckmaschine mit einem Formzylinder, welcher an seiner Aussenoberfläche mit einem Druckformträger versehen ist, und mit einer Gegenwalze, die auf eine zwischen der Gegenwalze und dem Formzylinder hindurchgeführten Druckbahn eine Druckkraft auszuüben vermag.

### Stand der Technik

Druckmaschinen dieser Art sind je nach Druckformträger als Tiefdruck-, Hochdruck-, Flachdruck- oder Offset-Rotationsmaschinen in verschiedenen Ausführungen bekannt. Die Gegenwalze ist dabei meist als Presseur, d.h. als weiche Druckwalze ausgebildet, mit welcher die zur Uebertragung des Druckmusters vom Formzylinder erforderliche Druckkraft auf die Druckbahn, beispielsweise eine Papierbahn oder Kunststofffolie oder dgl. ausgeübt wird. Bei Rotationsdruckmaschinen zum gleichzeitigen Bedrucken einer Druckbahn auf beiden Seiten kann die Gegenwalze jedoch auch ein weiterer Formzylinder mit einem anderen Druckformträger sein, wobei einer der beiden Formzylinder eine Druckkraft gegen den anderen Formzylinder ausübt.

Von solchen Rotationsdruckmaschinen wird gefordert, dass die Druckqualität über die gesamte Breite der Druckbahn hinreichend gleichmässig ist. Wegen der unterschiedlichen Durchbiegung des Formzylinders und der Gegenwalze sowie dem Auftreten von Resonanzschwingungen der beiden Walzen ist dies jedoch schwierig. Um dieses Ziel trotzdem zu erreichen, ist z.B. in der EP-A-439 822 oder in der US-A-4 058 877 eine Tiefdruckrotationsmaschine vorgeschlagen, deren Presseur einen feststehenden Träger und einen um diesen rotierbaren Mantel aufweist, wobei der Presseurmantel gegen den Träger in Druckrichtung mit einer Reihe in Axialrichtung nebeneinander angeordneter Stützelemente mit wenigstens teilweise individuell einstellbarer Stützkraft abgestützt ist. Mittels der individuell oder gruppenweise über die Breite steuerbaren Druckkraft der Stützelemente kann bei geeigneter Steuerung eine weitgehend gleichmässige Druckkraft oder ein gewünschtes Druckprofil über die Breite der Druckbahn erreicht werden. Trotzdem zeigten sich bei Rotationsdruckmaschinen grösserer Breite und höherer Druckkraft auch bei Verwendung eines solchen Presseurs trotz der Steuerbarkeit der Druckkraft über die Bahnbreite immer noch unerwünschte Druckqualitätsschwankungen über die Druckbreite.

### Beschreibung der Erfindung

Die Erfindung setzt sich die Aufgabe, die vorstehend erwähnten Nachteile des Standes der Technik zu beseitigen und insbesondere eine Rotationsdruckmaschine der eingangs angegebenen Art derart zu verbessern, dass auch unter extremen Belastungen und insbesondere bei breiten Druckbahnen und Druckmaschinen ein qualitativ einwandfreier Druck erreichbar ist, bzw. dass umgekehrt ein qualitativ einwandfreier Druck bei einer breiteren Druckbahn und einer grösseren Maschinenbreite erreichbar ist.

Erfindungsgemäss wird diese Aufgabe dadurch gelöst, dass der Formzylinder einen drehfesten Träger und einen um diesen rotierbaren Mantel aufweist, welcher gegen den Träger entgegen der Druckrichtung mit einer Reihe in Achsenrichtung nebeneinander angeordneter Stützelemente mit wenigstens teilweise individuell einstellbarer Stützkraft abgestützt ist.

Die Erfindung geht dabei von dem Gedanken aus, nicht nur die Druckkraft über die Breite gleichmässig zu machen, sondern gleichzeitig die Durchbiegung des Presseurs und des Formzylinders durch die Druckkraft des Presseurs und durch sein Eigengewicht zu beseitigen und einen weitgehend ebenen Spalt zwischen Presseur und Formzylinder herzustellen, so dass damit eine Wölbung und Verzerrung der Druckbahn und die dadurch verursachte Minderung der Druckqualität vermieden wird. Dies ist allein durch eine spezielle Ausbildung des Presseurs nicht zu erreichen , sondern erfordert zusätzlich eine spezielle Ausbildung des Formzylinders.

Mit Vorteil ist der Mantel des Formzylinders zusätzlich quer zur Druckrichtung und in Laufrichtung der Druckbahn gegen den Träger durch wenigstens ein Querstützelement mit individuell einstellbarer Rückstellkraft abgestützt.

Dabei wird von der weiteren Erkenntnis ausgegangen, dass es bei besonders breiten Rotationsdruckmaschinen mit Breiten über 2500 mm bis in den Bereich von etwa 10 000 mm nicht allein genügt, die Druckkraft über die Druckbahnbreite zu vergleichmässigen und gleichzeitig einen ebenen Druckspalt aufrechtzuerhalten, sondern dass durch das Drehmoment des angetriebenen Formzylinders eine Deformation und ein seitliches Ausweichen des Formzylinders aus der Druckebene stattfindet. Diesen unerwünschten Deformationen und Verlagerungen des Formzylinders können die Hilfsaggregate, wie das Rakelmesser zum Abschaben überschüssiger Farbe von der Formzylinder-Oberfläche oder die Farbauftrags- bzw. Feuchtwalzen nicht ohne weiteres folgen. Dies gilt insbesondere für Formzylinder mit geringem Durchmesser, wie sie für bestimmte Druckaufträge benötigt werden. Durch die geeignet gesteuerte oder geregelte Rückstellkraft der Querstützelemente kann erreicht werden, dass der Formzylinder-Mantel seine Form und seine Position in der Druckebene beibehält, wobei gleichzeitig die Durchbiegung des Formzylinders in der Druckebene durch die entgegen der Druckkraft arbeitenden Stützelemente beseitigt wird.

Weiter wurde berücksichtigt, dass die Druckqualität durch Resonanz-Schwingungen in der Druckmaschine beeinträchtigt wird. Werden die Stützelemente als hydrostatische oder hydrodynamische Lager ausgeführt, wird eine hydraulische Dämpfung erzielt, die die Schwingungen des Feder-Masse-Systems Formzylinder/Presseur sowohl in Richtung der Druckkraft als auch senkrecht hierzu dämpfen.

Obwohl im Prinzip eine konventionelle Gegenwalze verwendet werden kann, ist es von besonderem Vorteil, die Gegenwalze, z.B. den Presseur ebenfalls, wie im Prinzip bekannt, mit einem drehfesten Träger und einem um diesen rotierbaren Presseurmantel auszubilden, welcher ebenfalls mit einer Reihe axial nebeneinander angeordneter Stützelemente in Druckrichtung gegen den Träger abgestützt ist, oder im Fall von Doppeldruckmaschinen beide gegeneinander wirkende Formzylinder in analoger Weise mit Stützelementen zu versehen, welche gegeneinander in der jeweiligen Druckrichtung arbeiten.

Hiermit steht ein weiterer Parameter zur Einstellung einer gleichmässigen Druckkraft bei einem ebenen Druckspalt zur Verfügung, und bei Verwendung von hydrostatischen oder hydrodynamischen Lagern als Stützelemente wird eine optimale Dämpfung beider Walzen in horizontaler und vertikaler Richtung erzielt.

Durch das Zusammenwirken der genannten Massnahmen lässt sich überraschend in einem grossen Druckkraftbereich eine gleichmässige Druckkraft über die Druckbahnbreite bei gleichzeitiger Einhaltung eines ebenen Druckspaltes unter Vermeidung von Druckbahnverzerrungen erreichen, wobei zusätzlich durch die Positions- und Formstabilisierung des Formzylindermantels ein gleichmässiger Farbauftrag über die Breite auch bei besonders breiten Druckbahnen gewährleistet wird und durch die schwingungsdämpfenden Massnahmen keine Passerverschiebungen infolge von Systemschwingungen auftreten.

### Kurze Beschreibung der Figuren

Die Erfindung wird anhand der in den beigefügten Figuren dargestellten Ausführungsbeispiele näher erläutert. Es zeigen:
- Fig. 1: eine Tiefdruckrotationsmaschine im Schnitt entlang der Druckebene,
- Fig. 2: die Tiefdruckrotationsmaschine im Querschnitt entlang der Mittelebene,
- Fig. 3: eine Offset-Rotationsmaschine im Querschnitt, und
- Fig. 4: eine Zweifarbendoppeloffset-Rotationsmaschine im Querschnitt.

### Beschreibung bevorzugter Ausführungsbeispiele

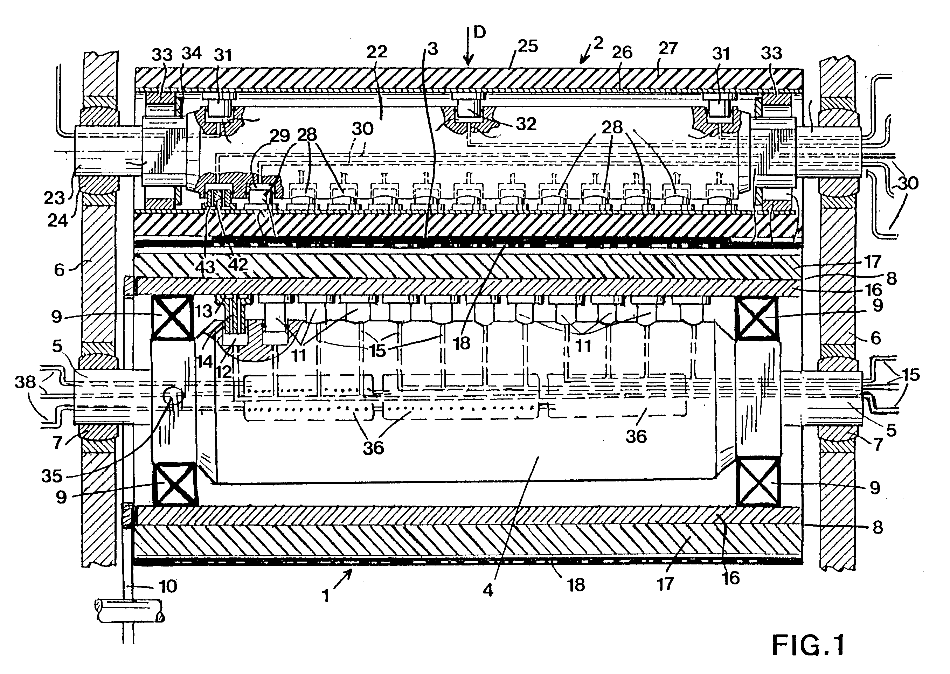

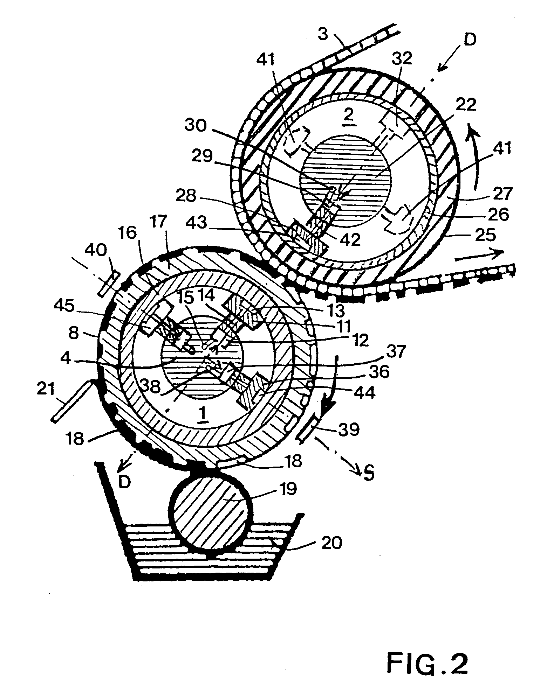

Das in den Figuren 1 und 2 dargestellte Druckwerk einer Tiefdruck-Rotationsmaschine weist einen Formzylinder 1 mit der Druckform an seiner Oberfläche und als Gegenwalze einen Presseur 2 auf, mit welchem eine Druckkraft relativ zum Formzylinder 1 auf die zwischen Formzylinder 1 und Presseur 2 hindurchgeführte, z.B. aus Papier, Kunststoff oder dgl. bestehende Druckbahn 3 zur Uebertragung des Druckmusters vom Formzylinder 1 auf diese Druckbahn 3 ausgeübt wird.

Um eine gleichmässige Druckqualität über die Breite der Druckbahn 3 zu erreichen, ist der Formzylinder 1 mit einem feststehenden Träger 4 versehen, dessen Zapfen 5 im Maschinengehäuse 6 mittels Schwenklagern 7 drehfest gelagert sind. Auf diesem Träger 4 ist ein Mantel 8 in seinen Endbereichen mittels Pendellagern 9 rotierbar gelagert und mit einem geeigneten Antrieb 10 zur Rotation mit der gewünschten Drehzahl antreibbar.

Zwischen den beiden Pendellagern 9 ist der Formzylindermantel 8 gegen den Träger 4 mit einer Reihe von in Achsenrichtung nebeneinander angeordneten Stützelementen 11 abgestützt. Diese Stützelemente 11 sind eingerichtet, in der Druckebene D entgegen der Druckrichtung des Presseurs 2 eine individuell oder zumindest gruppenweise steuerbare Druckkraft auszuüben, so dass bei geeigneter Ansteuerung eine gleichmässige Druckkraft über die Breite der Druckbahn 3 erzeugt und gleichzeitig ein weitgehend ebener Druckspalt zwischen Formzylinder 1 und Presseur 2 unter Vermeidung von Verzerrungen der Druckbahn 3 erreicht werden kann.

Mit Vorteil können die Stützelemente 11 als nachfahrende hydrostatische Stützelemente ausgebildet sein, welche jeweils in einer Zylinderbohrung 12 im Träger 4 in Druckrichtung D verschiebbar sind und welche an ihrer Lagerfläche hydrostatische Lagertaschen 13 tragen, welche mit Drosselbohrungen 14 mit dem Zylinderraum 12 verbunden sind. Die Zylinderräume 12 der einzelnen Stützelemente 11 sind über Druckleitungen 15 individuell oder wie im dargestellten Beispiel in mehreren Gruppen mit einem Druckfluid steuerbaren Druckes versorgbar. Hiermit wird erreicht, dass die Druckkraft der einzelnen Stützelemente 11 individuell oder gruppenweise gesteuert und geregelt werden kann, und zwar zufolge der Nachfahrbarkeit der Stützelemente unabhängig von einer Durchbiegung des Trägers 4 unter Einwirkung der Druckkraft und der beteiligten Gewichte, d.h. dass trotz einer Durchbiegung des Trägers 4 unter Druckkraft der Druckspalt zwischen Formzylinder 1 und Preusseur 2 und somit die Druckbahn 3 im Druckspalt eben bleibt.

Es wird bemerkt, dass statt der beschriebenen Stützelemente auch andersartige Stützelemente mit individuell steuerbarer Stützkraft, beispielsweise hydrodynamische, pneumatische, magnetische oder andere Stützelemente Verwendung finden können. Mit Vorteil werden solche gewählt, die zusätzlich zur Druckkraft auch schwingungsdämpfende Eigenschaften aufweisen.

Der Mantel 8 des Formzylinders 1 ist mit Vorteil aus mehreren koaxialen Zonen aufgebaut, beispielsweise aus einem Innenrohr 16, z.B. aus gewickeltem glasfaserverstärktem Kunststoff oder einem Polymerwerkstoff, und einem aussen anschliessenden austauschbaren Füllkörper 17, z.B. aus elastischem Material, welcher an seiner Aussenfläche mit dem Druckformträger 18 versehen ist. Dabei kann es sich um eine auswechselbare Druckform handeln oder um eine aufgalvanisierte und anschliessend gravierte oder geätzte Druckform. Auf diese Druckform 18 wird, wie speziell aus Fig. 2 ersichtlich, mittels einer Farbwalze 19 aus einem Reservoir 20 die Druckfarbe aufgetragen, wobei die überschüssige Druckfarbe von einem Rakelmesser 21 von der Druckform 18 abgeschabt wird, so dass nur an den gewünschten Stellen Druckfarbe auf die Druckbahn 3 übertragen wird.

Der mit dem Formzylinder 1 als Gegenwalze zusammenwirkende Presseur 2 kann in konventioneller Weise als Walze mit weichelastischem Bezug ausgebildet sein, wobei auf die Zapfen des Presseurs eine Kraft zur Erzeugung der erforderlichen Druckkraft ausgeübt wird. Hiermit lässt sich in einem gewissen Bereich in Zusammenwirken mit einem Formzylinder 1 mit über die Breite individuell steuerbarer Druckkraft eine über die Druckbahnbreite gleichmässige Druckkraft oder ein gewünschtes Druckkraftprofil erzeugen. Die durch die Druckkraft und das Gewicht des Presseurs entstehende Durchbiegung sollte dabei durch geeignete Massnahmen, beispielsweise eine Bombierung des Presseurs kompensiert werden, so dass zusätzlich bei einer bestimmten Druckkraft ein weitgehend ebener Druckspalt erreichbar ist.

Um auch in einem grösseren Druckkraftbereich gleichzeitig eine gleichmässige Druckkraft über die Breite als auch einen ebenen Druckspalt und zusätzlich eine Dämpfung zu erreichen, ist es von Vorteil, auch den Presseur mit einem Träger 22 zu versehen, dessen Zapfen 23 mittels Pendellagern 24 im Maschinengehäuse 6 schwenkbar aber drehfest gelagert sind, sowie mit einem Presseurmantel 25, welcher aus einem elastischen Innenrohr 26 und einem gummiweichen Bezug 27 besteht. Der Presseurmantel 25 ist wiederum mit einer Reihe von axial nebeneinander angeordneten Stützelementen 28 gegen den Träger 22 abgestützt. Auch hier können die Stützelemente als nachfahrende hydrostatische Stützelemente ausgebildet sein, welche in einem Druckraum 29 im Träger 22 in Druckrichtung D beweglich sind und an ihren Laufflächen hydrostatische Lagertaschen 43 tragen, die mit dem zugehörigen Druckraum 29 über Drosselbohrungen 42 verbunden sind. Die einzelnen Druckräume 29 der Stützelemente 28 sind individuell oder gruppenweise über Leitungen 30 mit einem Druckfluid steuerbaren Druckes versorgbar.

Die steuerbare Druckkraft der Stützelemente 28 des Presseurs 2 stellt einen weiteren Parameter dar, durch welchen auch bei verschiedenen Druckkräften, d.h. in einem grösseren Druckkraftbereich gleichzeitig eine gleichmässige Druckkraft über die Druckbahnbreite erreichbar ist, als auch ein weitgehend ebener Druckspalt erzielt werden kann.

Zur Korrektur von Randeffekten, beispielsweise Ueberpressungen an den Druckbahnrändern oder zur Umstellung auf eine andere Druckbahnbreite sind an den Rändern des Presseurmantels 25 zusätzliche, in Gegenrichtung wirkende Stützelemente 31 vorgesehen. Zusätzlich ist in Mantelmitte ein weiteres, in Gegenrichtung wirkendes Stützelement 32 angeordnet, mittels dem zusammen mit den Randstützelementen 31 der Presseur auf einfache Weise angehoben werden kann.

An den Rändern ist der Presseurmantel 25 mit Vorteil mittels Pendellagern 33 auf einer Führungsvorrichtung gelagert, welche einerseits eine Rotation des Presseurmantels 25 um den Träger 22 erlaubt, andererseits eine gewisse Beweglichkeit in Druckrichtung D, beispielsweise mittels einer geeigneten Kulissen-, Parallelogramm- oder Gleitführung. Stattdessen kann jedoch auch der Presseurmantel 25 in Druckrichtung unverschiebbar auf dem Träger 22 gelagert sein, wobei dann der Formzylindermantel 8 umgekehrt in Druckrichtung verschiebbar auf dem entsprechenden Träger 4 gelagert wird. Es können auch beide Mäntel 8 und 25 fest auf dem entsprechenden Träger 4 und 22 gelagert sein, wobei dann aber zusätzlich Anstellkräfte an den Presseurzapfen 23 eingebracht werden müssen.

Es zeigte sich, dass die genannten Massnahmen bei Druckbahnbreiten bis in den Bereich von 2500 mm und den üblichen Formzylinderdurchmessern von 250 - 350 mm im allgemeinen ausreichend sind, um die verlangte Druckqualität über die gesamte Druckbahnbreite zu erreichen. Bei modernen Maschinen mit breiteren Formzylindern bis in den Bereich von 10 000 mm und entsprechend schlankeren Formzylindern mit einem Durchmesser/Längen-Verhältnis bis in den Bereich von 1:40 und einer Papierbahngeschwindigkeit bis 20 m/s erwiesen sich die vorstehend beschriebenen Massnahmen auch in Kombination nicht als ausreichend, um über die gesamte Druckbahnbreite einen qualitativ einwandfreien Druck zu gewährleisten.

Es wurde erkannt, dass die Qualitätsverminderung bei besonders breiten Rotationsdruckmaschinen darauf zurückzuführen war, dass sich auch die relativ flexiblen Formzylinder infolge der Kräfte und Drehmomente beim Betrieb der Druckmaschine verformen, insbesondere dass der Mantel 8 des Formzylinders 1 in seitlicher Richtung S auszuweichen versucht, und zwar in grösserem Masse in Zylindermitte und in abnehmendem Masse zu den Enden des Mantels 8 hin. Diese Verformung führte zu unerwünschten Verzerrungen des Druckbildes.

Ferner wurde bei breiten Rotationsmaschinen ohne spezielle Vorkehrungen die Berührungslinie zur Farbauftragswalze verändert, so dass die Einfärbung der Druckform einerseits und die ungleichmässige Abnützung der Farbauftragswalze andererseits das Druckergebnis negativ beeinflussten. Ebenso wurde die Berührungslinie zum Rakelmesser verändert und der Rakelmesserdruck über der Breite so verändert, dass eine ungleichmässige Entfernung der überschüssigen Farbe von der Oberfläche über die Bahnbreite eintrat und der Farbauftrag über die Breite der Druckbahn 3 ungleichmässig wurde und in gewissen Zonen Verschmierungen auftreten konnten oder ein partieller Verschleiss des Rakelmessers und der Druckform die Folge war.

Um diese Effekte zu beseitigen, ist der Mantel 8 des Formzylinders 2 in Querrichtung S zusätzlich durch weitere Querstützelemente 36 gegen den Träger 4 abgestützt. Bei diesen Querstützelementen 36 kann es sich wiederum um nachfahrende hydrostatische Stützelemente handeln, deren mit den Lagertaschen 44 verbundener Druckraum 37 über Druckleitungen 38 mit einem Druckfluid einstellbaren Druckes versorgt werden kann, was den zusätzlichen Vorteil der Dämpfung bewirkt, oder als andersartige Stützelemente mit steuerbarer Stützkraft. Von Vorteil ist es, wenn die Stützkraft dieser Querstützelemente 36 etwa senkrecht zur Druckrichtung gerichtet ist oder zumindest eine wesentliche Komponente senkrecht zur Druckrichtung D besitzt. Dabei können die Querstützelemente 36 auch als langgestreckte Stützleisten ausgebildet sein, deren Anzahl auch kleiner sein kann als die Anzahl der in Druckrichtung wirkenden Stützelemente 11, wobei im Extremfall auch ein einziges Querstützelement 36 genügen kann. Mit Vorteil werden jedoch mindestens drei Querstützelemente 36 oder mindestens drei Gruppen solcher Stützelemente gewählt. Zur besseren Schwingungsdämpfung können zusätzlich in entgegengesetzter Richtung wirkende Gegenstützelemente 45 vorgesehen sein.

Um eine exakte Position und Form des Formzylindermantels 8 aufrechtzuerhalten, ist wenigstens an einer Seite des Formzylinders 2 in Querrichtung S ein gegen das Maschinengehäuse 3 abgestützter Positionsfühler 39 und/oder 40 vorgesehen. Mit Vorteil werden berührungslose Positionsfühler 39, 40 zur Messung der Position der Aussenoberfläche des Formzylindermantels 8 verwendet, beispielsweise induktive oder mit Laserstrahlung arbeitende Distanzmesser oder dgl. Vom Ausgangssignal des Distanzmessers 39, 40 wird über eine geeignete Regeleinrichtung der Druck des Druckfluids in der Druckleitung 38 und damit die Rückstellkraft des Querstützelementes 36 so lange nachgeregelt, bis die Position der Formzylinderoberläche 18 den vorgesehenen Sollwert erreicht, bei dem ein einwandfreier Farbauftrag durch die Farbwalze 19 und ein sauberes Abschaben überschüssiger Farbe durch die Rakel 21 gewährleistet ist. Erst damit lässt sich auch bei sehr schlanken und flexiblen Formzylindern über die gesamte Breite der Druckbahn 3 ein qualitativ einwandfreier Druck erreichen.

Statt der Positionsfühler 39 können an den Lagern 9, mit denen der Mantel 8 auf dem Träger 4 rotierbar gelagert ist, oder den Lagern 7, in denen der Formzylinder gesamthaft gelagert ist, quer zur Druckebene D auch Sensoren 35 zur Messung der Lagerquerkraft vorgesehen sein, die die Rückstellkraft der Querstützelemente 36 so regeln, dass die Lagerkraft gegen Null geht. Dies bedeutet, dass der Mantel 8 im Gleichgewicht ist und keine seitliche Querauslenkung aufweist.

Von Vorteil ist es bei Presseuren, die mit einem flexiblen Mantel 25 versehen sind, zum Verhindern eines seitlichen Ausbrechens ebenfalls zusätzliche Führungselemente 41 in Querrichtung vorzusehen. Hierbei kann es sich in der Regel auch um einfache, fest mit dem Träger 22 verbundene Führungselemente handeln, da beim Presseur 2 meist nicht die gleiche Präzision verlangt wird wie beim Formzylinder 1.

Der vorstehend anhand einer Tiefdruckrotationsmaschine beschriebene Erfindungsgedanke kann auch bei anderen Rotationsdruckmaschinen mit anderen Formträgern, wie Hochdruck-, Flachdruck- und Rollenoffset-Maschinen Verwendung finden.

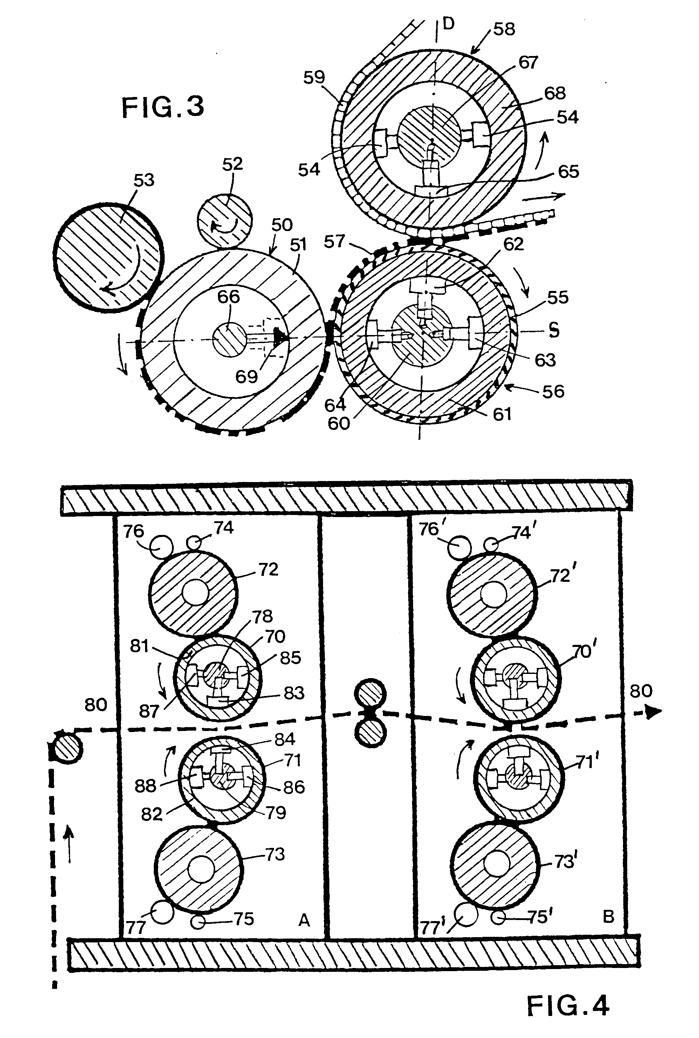

Bei der in Fig. 3 wiedergegebenen Rollenoffset-Maschine trägt der Formzylinder 50 auf seiner Oberfläche 51 die primäre Druckform, auf welche die Druckfarbe nach der Feuchtwalze 52 mittels der Farbwalze 53 aufgetragen wird und an den vorgesehenen Stellen der Oberfläche 51 haften bleibt. Die Druckfarbe wird dann von der Oberfläche 51 des Druckzylinders 50 auf die Grummioberfläche 55 des folgenden Formzylinders 56 übertragen, auf welcher sie eine sekundäre Druckform 57 bildet. Diese wird wiederum im Spalt zwischen dem Formzylinder 56 und dem Presseur 58 auf die zwischen diesen hindurchlaufende Papierbahn 59 übertragen.

Auch hier besteht der Formzylinder 56 aus einem drehfesten Träger 60 und einem um diesen rotierbaren Mantel 61, welcher an seiner Oberfläche mit der für die Druckformübernahme erforderlichen Gummischicht 55 versehen ist. Der Mantel 61 ist einerseits mit einer Reihe von axial nebeneinander angeordneten, in Druckrichtung D wirkenden nachfahrenden Stützelementen 62 ausgerüstet, welche zusammen mit dem Presseur 58 die erforderliche über die Breite gleichmässige Druckkraft erzeugen, andererseits aber auch mittels quer zur Druckrichtung D wirkenden Querstützelementen 63 und 64.

Die Stützelemente 62, 63 und 64 können wiederum als in einem zylindrischen Druckraum bewegliche hydrostatische Stützelemente ausgebildet sein oder in anderer geeigneter Art.

Der Presseur 58 kann ebenfalls mit einer Reihe von in Druckrichtung D wirkenden und nachfahrenden Stützelementen 65 versehen sein, sowie mit Querstützelementen 54. Der Druckzylinder 50 kann hierbei in konventioneller Weise ausgebildet sein, wobei nötigenfalls zusätzlich Kräfte über die Zapfen 66 eingebracht werden können, oder aber eine Gegenkraft über analoge, gegen den Formzylinder 56 wirkende Druckelemente 69 erzeugbar ist, oder aber der Formzylinderzapfen 66 ist fest gelagert, und die Anpresskraft wird mit den Elementen 64 erzeugt.

Durch die Regelung der Stützkräfte der Stützelemente 62, 63 und 64 in Zusammenwirken mit geeigneten Positionsfühlern kann auch hier die Position des Formzylinders 56 und das Druckprofil der Druckspalte so eingehalten werden, dass sich auch bei besonders breiten Druckbahnen und entsprechend schlanken Zylindern über die gesamte Druckbahnbreite ein qualitativ einwandfreier Druck erzielen lässt.

In analoger Weise lässt sich der Erfindungsgedanke auch bei komplizierteren Druckmaschinen anwenden, wie beispielsweise bei der in Fig. 4 dargestellten Zweifarben-Doppeloffsetrotationsmaschine. Diese besteht aus zwei hintereinander geschalteten Druckwerken A und B für zwei verschiedene Farben mit jeweils zwei Formzylindern 70 und 71, bzw. 70' und 71', zum gleichzeitigen Bedrucken der zwischen den Formzylindern hindurchlaufenden Papierbahn 80 auf beiden Seiten. Die Druckform wird auf die Oberflächen der Formzylinder 70, 71 von jeweils einem zugehörigen Druckzylinder 72 bzw. 73 übertragen, welche wiederum mittels jeweils einer Feuchtwalze 74, 75 und Farbwalze 76, 77 eingefärbt werden.

Die beiden Formzylinder 70 und 71 bestehen wiederum aus je einem drehfesten Träger 78 bzw. 79 und einem um den Träger 78, 79 rotierbaren Mantel 81, 82, welcher gegen den Träger 78, 79 mit wenigstens einem Stützelement 83, 84 mit individuell steuerbarer Druckkraft abgestützt ist. Dabei ist einer der beiden Formzylindermäntel 81 über seine gesamte Länge in Druckrichtung verschiebbar gelagert, während der andere Formzylindermantel 82 rotierbar, aber in Druckrichtung unverschiebbar auf dem Träger gelagert ist, und somit der eine Formzylinder 70 die Funktion des Presseurs im erstbeschriebenen Ausführungsbeispiel ausübt.

Um auch hier eine Deformation und ein seitliches Ausweichen der Presszylinder 70, 71 zu verhindern, sind zusätzlich in Querrichtung wirkende Stützelemente 85, 86 vorgesehen, welche eine solche Rückstellkraft auf den Mantel 81, 82 ausüben, dass dessen Position erhalten bleibt und eine einwandfreie Druckqualität auch bei relativ breiten Druckbahnen 80 erreichbar ist. Die Steuerung der Rückstellkräfte kann auch hierbei wieder mittels geeigneter Positionssensoren erfolgen. Auch hier können zur Erreichung einer noch besseren Stabilisierung und Schwingungsdämpfung zusätzlich noch Gegenstützelemente 87, 88 vorgesehen sein.

Das folgende Druckwerk B und allfällig folgende Druckwerke für weitere Farben sind mit Vorteil analog aufgebaut wie das erste Druckwerk A. Dem Druckwerk A entsprechende Elemente sind beim Druckwerk B in Figur 4 mit Apostroph (') gekennzeichnet.

## Patentansprüche

1. Rotationsdruckmaschine mit einem Formzylinder (1, 56, 70, 71), welcher an seiner Aussenobenfläche mit einem Druckformträger (18, 57) versehen ist, und mit einer Gegenwalze (2, 58, 70, 71), die auf eine zwischen der Gegenwalze und dem Formzylinder hindurchgeführten Druckbahn (3, 59, 80) eine Druckkraft auszuüben vermag, dadurch gekennzeichnet, dass der Formzylinder (1, 58, 70, 71) einen drehfesten Träger (4, 60, 78, 79) und einen um diesen rotierbaren Mantel (8, 61, 81, 82) aufweist, welcher gegen den Träger entgegen der Druckrichtung (D) mit einer Reihe in Achsenrichtung nebeneinander angeordneter Stützelemente (11, 62, 83, 84) mit wenigstens teilweise individuell einstellbarer Stützkraft abgestützt ist.

2. Druckmaschine nach Anspruch 1, dadurch gekennzeichnet, dass der Mantel (8, 61, 81, 82) zusätzlich quer zur Druckrichtung und in Laufrichtung der Druckbahn gegen den Träger durch wenigstens ein Querstützelement (36, 63, 85, 86) mit individuell einstellbarer Rückstellkraft abgestützt ist.

3. Druckmaschine nach Anspruch 2, dadurch gekennzeichnet, dass zusätzlich wenigstens ein in Gegenrichtung zu den Querstützelementen (36, 63, 85, 86) wirkendes Gegenstützelement (45, 64, 88) vorgesehen ist.

4. Druckmaschine nach einem der Ansprüche 1 - 3, dadurch gekennzeichnet, dass wenigstens ein Positionsfühler (39, 40) zur Messung der Position des Formzylindermantels (8) quer zur Druckrichtung (D) und zur Steuerung der Rückstellkraft der Querstützelemente (36) derart, dass der Formzylindermantel (8) eine vorgegebene Position einnimmt, vorgesehen ist.

5. Druckmaschine nach einem der Ansprüche 1 - 3, dadurch gekennzeichnet, dass der Mantel (8) auf dem Träger (4) mittels Lagern (9) in Radialrichtung unverschieblich, rotierbar gelagert ist, und dass an den Lagern (9) quer zur Druckrichtung (D) Kraftsensoren (35) zur Messung der Lagerkraft und zur Steuerung der Rückstellkraft der Querstützelemente derart, dass die Lagerkräfte wenigstens angenähert Null werden, vorgesehen sind.

6. Druckmaschine nach einem der Ansprüche 1 - 5, dadurch gekennzeichnet, dass die Gegenwalze ebenfalls einen drehfesten Träger (22, 67) und einen um diesen rotierbaren, mittels wenigstens einem Stützelement (28, 65) mit wenigstens teilweise individuell einstellbarer Stützkraft abgestützten Mantel (25, 68) aufweist.

7. Druckmaschine nach einem der Ansprüche 1 - 6, dadurch gekennzeichnet, dass einer der beiden Mäntel (25) des Formzylinders (1) oder des Presseurs (2) auf einer gegenüber dem zugehörigen Träger (22) in Druckrichtung (D) verschiebbaren Führungsvorrichtung (33, 34) rotierbar gelagert ist, während der andere Mantel (8) auf dem Träger (4) wenigstens an einer Lagerstelle (9) rotierbar, aber in Druckrichtung unverschiebbar gelagert ist.

8. Druckmaschine nach einem der Ansprüche 1 - 7, dadurch gekennzeichnet, dass die Stützkraft der Stützelemente (11, 62, 83, 84) und gegebenenfalls auch die Stützkraft der in Druckrichtung (D) wirkenden Stützelemente (28, 65) der Gegenwalze (2, 58) derart individuell bzw. gruppenweise über die Druckbahnbreite gesteuert ist, dass die Druckkraft über die Druckbahnbreite (3) ein vorgegebenes Profil aufweist, insbesondere über die Druckbahnbreite gleichmässig ist, als auch dass der zwischen Formzylinder (1, 56) und Gegenwalze (2, 58) gebildete Druckspalt zumindest angenähert eben ist.

9. Druckmaschine nach einem der Ansprüche 1 - 8, dadurch gekennzeichnet, dass wenigstens ein Teil der Stützelemente (11, 28, 62, 65, 83, 84), bzw. der Quer- und Gegenstützelemente (36, 63 85, 86; 45, 64, 88) als auf einem mit Druckmittel steuerbaren Druckes versorgbaren Druckraum (12, 29, 37) in Stützrichtung verschiebbare hydraulische Stützelemente ausgebildet sind.

10. Druckmaschine nach Anspruch 9, dadurch gekennzeichnet, dass wenigstens ein Teil der Stützelemente, bzw Quer- und Gegenstützelemente an ihrer jeweiligen Lagerfläche mit wenigstens einer hydrostatischen Lagertasche (13, 43, 44) versehen sind, die mit einem Drosselkanal (14, 42) mit dem zugehörigen Druckraum (12, 29) verbunden ist.

## Claims

1. Rotary printing press comprising an image cylinder (1,56,70,71), which is on its outer surface provided with a printing image carrier (18,57), and a counter-cylinder (2,58,72,73), which can exert pressure onto a web (3,59,80) passing between the counter-cylinder and the image cylinder, characterised in that the image cylinder (1,56,70,71) comprises a stationary beam (4,60,78,79) and a shell (8,61,81,82) which is rotatable about the beam and is supported by the beam against the direction of pressure (D) through a series of supports (11,62,83,84) which are arranged one next to each other in axial direction and whose supporting force is at least partly individually adjustable.

2. Press according to claim 1, characterised in that the shell (8,61,81,82) is additionally supported transversely to the direction of pressure and in the direction of movement of the web by the beam through at least one transverse support (36,63,85,86) with individually adjustable restoring force.

3. Press according to claim 2, characterised in that at least one counter-support (45,64,87,88) is additionally provided, which acts in a direction against the transverse supports (36,63,85,86).

4. Press according to any one of claims 1 to 3, characterised in that it comprises at least one position sensor (39,40) for the measurement of the position of the image cylinder shell (8) transversely to the direction of pressure (D) and for the control of the restoring force of the transverse supports (36) such, that the image cylinder shell (8) assumes a preselected position.

5. Press according to any one of claims 1 to 3, characterised in that the shell (8) is mounted on the beam (4) by means of bearings (9) rotatably but non-displaceably in radial direction, and that force sensors (35) are provided on the bearings (9) transversely to the direction of pressure (D) for the measurement of the bearing force and for the control of the restoring force of the transverse supports such, that the bearing forces become at least approximately equal to zero.

6. Press according to any one of claims 1 to 5, characterised in that the counter-cylinder also comprises a stationary beam (22,67) and a shell (25,68) which is rotatable about the beam, is supported by at least one support (28,65) with a supporting force which is at least partly individually adjustable.

7. Press according to any one of claims 1 to 6, characterised in that one of the two shells (25) of the image cylinder (1) or of the impression cylinder (2) is rotatably mounted on a guiding device (33,34) displaceable against the associated beam (22) in the direction of pressure (D), while the other shell (8) is mounted on the beam (4) rotatably at at least one bearing region (9) but non-displaceably in the direction of pressure.

8. Press according to any one of claims 1 to 7, characterised in that the support force of the supports (11,62,83,84), and possibly also the support force of the supports (28,65) of the counter-cylinder (2,58) which act in the direction of pressure (D), is so controlled individually or in groups across the width of the web, that the printing force has across the width of the web (3) a predetermined profile, particularly is uniform across the width of the web, and also that the print gap between the image cylinder (1,56) and the counter-cylinder (2,58) is at least approximately even.

9. Press according to any one of claims 1 to 8, characterised in that at least some of the supports (11,28,62,65,83,84) or the transverse supports or counter-supports (36,63,85,86; 45,64,88) are made as hydraulic supports displaceable in the direction of support in a pressure chamber (12,29,37) which may be supplied with pressure medium under controllable pressure.

10. Press according to claim 9, characterised in that at least some of the supports or the transverse supports and counter-supports are provided at their respective bearing area with at least one hydrostatic bearing pocket (13,43,44) which communicates via a throttling channel (14,42) with the associated pressure chamber (12,29).

## Revendications

1. Machine à imprimer rotative comprenant un cylindre porte-forme imprimante (1, 56, 70, 71), qui est muni d'une forme imprimante (18, 57) sur sa surface extérieure, et comprenant un rouleau de contre-pression (2, 58, 70, 71) capable d'exercer une force de pression sur une bande à imprimer (3, 59, 80) passant entre le rouleau de contre-pression et le cylindre porte-forme, caractérisée en ce que le cylindre porte-forme (1, 56, 70, 71) comporte un support fixe en rotation (4, 60, 78, 79) et une enveloppe (8, 61, 81, 82) qui peut tourner autour de celui-ci et qui prend appui contre le support, à l'opposé du sens de pression (D), au moyen d'une série d'éléments d'appui (11, 62, 83, 84) qui sont disposés côte à côte dans le sens axial et dont la force d'appui est réglable individuellement, au moins pour certains d'entre eux.

2. Machine à imprimer selon la revendication 1, caractérisée en ce que l'enveloppe (8, 61, 81, 82) prend également appui sur le support, transversalement au sens de pression et dans le sens de défilement de la bande à imprimer, au moyen d'au moins un élément d'appui transversal (36, 63, 85, 86) à force de rappel réglable individuellement.

3. Machine à imprimer selon la revendication 2, caractérisée en ce qu'il est également prévu au moins un élément d'appui antagoniste (45, 64, 88) agissant dans le sens opposé aux éléments d'appui transversaux (36, 63, 85, 86).

4. Machine à imprimer selon l'une des revendications 1 à 3, caractérisée en ce qu'il est prévu au moins un capteur de position (39, 40) pour mesurer la position de l'enveloppe (8) du cylindre porte-forme imprimante transversalement au sens de pression (D) et pour régler la force de rappel des éléments d'appui transversaux (36), de façon que l'enveloppe (8) du cylindre porte-forme adopte une position prédéfinie.

5. Machine à imprimer selon l'une des revendications 1 à 3, caractérisée en ce que l'enveloppe (8) est montée de manière rotative sur le support (4) au moyen de paliers (9), mais sans possibilité de déplacement dans le sens radial, et en ce que, sur les paliers (9), transversalement au sens de pression (D), il est prévu des capteurs de force (35) pour mesurer la force des paliers et pour régler la force de rappel des éléments d'appui transversaux, de façon que les forces des paliers soient au moins sensiblement égales à zéro.

6. Machine à imprimer selon l'une des revendications 1 à 5, caractérisée en ce que le rouleau de contre-pression comporte également un support fixe en rotation (22, 67) et une enveloppe (25, 68) qui peut tourner autour de celui-ci et qui prend appui au moyen d'un élément d'appui (28, 65) dont la force d'appui est réglable individuellement, au moins pour certains de ces éléments d'appui.

7. Machine à imprimer selon l'une des revendications 1 à 6, caractérisée en ce que l'une des deux enveloppes (25) du cylindre porte-forme (1) ou du presseur (2) est montée de manière rotative sur un dispositif de guidage (33, 34) pouvant se déplacer dans le sens de pression (D) par rapport au support correspondant (22), tandis que l'autre enveloppe (8) est montée sur le support (4) de manière rotative au moins en un point d'appui (9), mais sans possibilité de déplacement dans le sens de pression.

8. Machine à imprimer selon l'une des revendications 1 à 7, caractérisée en ce que la force d'appui des éléments d'appui (11, 62, 83, 84) et, le cas échéant, également la force d'appui des éléments d'appui (28, 65) du rouleau de contre-pression (2, 58), qui agissent dans le sens de pression (D), sont réglées individuellement ou par groupes sur toute la largeur de la bande à imprimer, de façon que la force de pression présente un profil prédéfini sur toute la largeur de la bande à imprimer (3), en particulier qu'elle soit uniforme sur la largeur de la bande à imprimer, et de façon également que la fente d'impression formée entre le cylindre porte-forme (1, 56) et le rouleau de contre-pression (2, 58) soit au moins sensiblement plane.

9. Machine à imprimer selon l'une des revendications 1 à 8, caractérisée en ce qu'au moins une partie des éléments d'appui (11, 28, 62, 65, 83, 84) ou des éléments d'appui transversaux et antagonistes (36, 63, 85, 86 ; 45, 64, 88) est conçue sous la forme d'éléments d'appui hydrauliques pouvant se déplacer dans le sens d'appui dans une chambre de pression (12, 29, 37) pouvant être alimentée en agent de pression à pression réglable.

10. Machine à imprimer selon la revendication 9, caractérisée en ce qu'au moins une partie des éléments d'appui ou des éléments d'appui antagonistes et transversaux comportent, au niveau de leur surface de portée respective, au moins une poche d'appui hydrostatique (13, 43, 44) qui est reliée à la chambre de pression correspondante (12, 29) par un canal d'étranglement (14, 42).
